(19)

**Europäisches Patentamt**
**European Patent Office**
**Office européen des brevets**

(11) **EP 4 510 619 B1**

(12) **EUROPEAN PATENT SPECIFICATION**

(45) Date of publication and mention
of the grant of the patent:
**26.11.2025 Bulletin 2025/48**

(51) International Patent Classification (IPC):
*H04R 3/02* (2006.01)     *H04R 3/08* (2006.01)
*G05B 13/04* (2006.01)

(21) Application number: **23191345.0**

(52) Cooperative Patent Classification (CPC):
**H04R 3/08; G05B 13/042; H04R 3/02**

(22) Date of filing: **14.08.2023**

(54) **CONTROLLER, SYSTEM, AND METHOD FOR CONTROLLING A LOUDSPEAKER**

STEUERUNG, SYSTEM UND VERFAHREN ZUR STEUERUNG EINES LAUTSPRECHERS

DISPOSITIF DE COMMANDE, SYSTÈME ET PROCÉDÉ DE COMMANDE D'UN HAUT-PARLEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**19.02.2025 Bulletin 2025/08**

(73) Proprietor: **Dirac Research AB
753 40 Uppsala (SE)**

(72) Inventors:
• **VOLKOV, Denys
753 23 Uppsala (SE)**
• **BRÄNNMARK, Lars-Johan
752 20 Uppsala (SE)**

(74) Representative: **AWA Sweden AB
Box 45086
104 30 Stockholm (SE)**

(56) References cited:
**GB-A- 2 324 888     US-A1- 2022 141 578**

• **KLIPPEL, WOLFGANG: "The Mirror Filter - A New
Basis for Reducing Nonlinear Distortion and
Equalizing Response in Woofer Systems", AES,
60 EAST 42ND STREET, ROOM 2520 NEW YORK
10165-2520, USA, 31 December 1992
(1992-12-31), XP040377162**
• **VOLKOV DENYS ET AL: "Convention Express
Paper 66", EXPRESS PAPER 66; AES
CONVENTION 154; MAY 2023, 14 May 2023
(2023-05-14), pages 1 - 22, XP093127551,
Retrieved from the Internet <URL:http://www.
aes.org/e-lib/browse.cfm?elib=22091> [retrieved
on 20240205]**
• **LOW STEPHEN ET AL: "A Network Approach to
the Adaptive Correction of Loudspeaker
Nonlinearities", 95TH CONVENTION AUDIO
ENGINEERING SOCIETY, NEW YORK, 1993,
OCTOBER 7-10, 10 October 1993 (1993-10-10),
pages 1 - 26, XP093127704, Retrieved from the
Internet <URL:https://www.aes.org/e-lib/browse.
cfm?elib=6482> [retrieved on 20240206]**

## Description

Technical field

The present invention relates to a controller, method, and system for controlling a loudspeaker. The disclosure also relates to linearization of nonlinearities of loudspeakers.

Background

Loudspeaker linearization is critical for achieving accurate and faithful audio reproduction. In particular, the process of designing electrodynamic transducer may be complex in view of constraints and requirements needed to be taken into consideration. In broad terms, a main endeavor may remain the same - to achieve an optimal or satisfactory performance of a reproduced audio signal. A criteria for achieving such a satisfactory performance is linearity of the audio chain, i.e. faithful reproduction of the input audio signal without introducing distortions or alterations to the audio. In particular, linearity in loudspeakers may ensure that the output audio signal accurately represents the input audio signal in terms of its harmonic components, with no added harmonic distortion or intermodulation. In strict technical language, linearity means that the audio chain should obey the principle of superposition. Similarly, nonlinearities in loudspeakers refer to deviations in the linearity of the audio chain and may cause distortions in the audio chain and inaccuracies in the outputted sound. Linearity may be particularly sought for in naturally nonlinear components of the loudspeaker, such as the magnetic field, the voice coil, and the membrane, which typically contribute the most to nonlinear distortions of loudspeakers.

By the complex, nonlinear, nature of loudspeakers, their response can change when subjected to different input signal strengths or intensities, consequently causing distortions. Thus a primary challenge is to overcome the inherent nonlinearities of loudspeakers.

The response of a loudspeaker refers to the relationship between the input audio signal and the resulting acoustic audio output from the loudspeaker. The response is commonly represented by a response function such as a function H{} that determines a relation between a physical output signal or quantity and an input signal or quantity in a time- or frequency domain. For example, a response function may describe the relation between a mechanical displacement $x(t)$ of a loudspeaker membrane and a voltage input signal $u(t)$ to the loudspeaker, e.g. $x(t) = H\{u(t)\}$. A response function may also describe the relation between a voice coil current signal $i(t)$ of the loudspeaker and the voltage input signal $u(t)$, e.g. $i(t) = G\{u(t)\}$.

Several techniques and solutions have been developed to address the challenges associated with achieving linearity in loudspeakers. However, these solutions face several problems and limitations that can hinder their effectiveness. Although the currently known techniques employ mathematical models to compensate for nonlinearities, they may not capture the full extent of the loudspeaker's behavior, limiting the achievable linearization.

The general problem of designing improved linear loudspeakers may normally be partly solved in the manufacturing of the loudspeakers by utilizing expensive materials and high-end construction components. This approach is widely applied in the field of Hi-Fi audio systems where engineers attempt to achieve optimal audio performance with minimal constraints. However, in regards to transducers for, e.g., automotive applications and portable smart devices, the size and cost of the loudspeakers are crucial constraints that hinder loudspeakers from achieving linear performance using only physical components. For such cases, advanced signal processing techniques, e.g., nonlinear system control, come into play.

A controller intended for nonlinear system control may be configured to add nonlinearities to the loudspeaker's input (voltage) signal, to compensate for and cancel out the inherent nonlinearities of the loudspeaker. Thereby, the loudspeaker's output (sound pressure) signal will be substantially linear in relation to the original uncompensated input signal. Hence, engineers may design loudspeakers without compromising the size and/or materials of the loudspeakers. Thus, instead, a digital signal processing, DSP, controller may compensate for the loudspeaker's inherent nonlinearities.

Prior art mainly present methods focusing on controlling one of three mechanical responses of the loudspeaker. In particular, certain solutions realize that sound is mere an acoustical pressure on a listener's ear drums, and that this pressure is proportional to the loudspeaker's membrane acceleration. However, a main disadvantage of controlling membrane acceleration is to measure the acceleration itself. For this purpose, accelerometer sensors are commonly attached to the loudspeaker's membrane, resulting in an additional moving mass which negatively affects the loudspeaker performance, increases cost, and may be overall inconvenient in practice.

Other candidates for controllers use membrane velocity or membrane displacement as a parameter for representing the loudspeaker's frequency response, which both are linearly dependent with acceleration and with each other. To measure these parameters, contactless methods using lasers are commonly used with the advantage of not affecting any of the loudspeaker's internal parameters. Examples of such controllers can be found in GB 2 324 888 A, for example.

Despite its advantages, velocity and displacement controls have several disadvantages. The accuracy of the frequency response is particularly essential for obtaining a good linearization, however, measurements with lasers are usually noisy and introduces inaccuracies and errors by being easily influenced by background noise and environmental conditions. Moreover, both these parameters are limiting in frequency range since membrane displacement and velocity-based controllers are limited by the physical constraints on the actual membranes. In particular, the displacement of a loudspeaker membrane is finite and directly restricted by the dimensions and materialistic features of the membrane itself and its suspension. Therefore, the frequency response, and the correction corresponding to these frequencies, will be limited. Nonlinearities outside of this range would be neglected or incorrectly represented, causing inconsistencies at certain frequencies. Especially, displacement is a parameter with a strong low-pass character with cutoff at the loudspeaker's resonance frequency, meaning that the displacement of the loudspeaker membrane is more responsive to frequencies below the loudspeaker's resonance frequency and less responsive to frequencies above the resonance frequency. In particular, due the low-pass character of the displacement, high-frequency components of the displacement itself are typically obscured by measurement noise, making it challenging to accurately model and control. Consequently, precise control of the high-frequency component of the displacement may not be possible.

Thus, there is a need for an improved controller and a corresponding controller algorithm for accurate linearization of loudspeakers.

A controller for controlling a loudspeaker, wherein the controller is configured to generate a loudspeaker control voltage signal from an input audio signal is known from US 2022/141578 A1. This documents in particular teaches that during a training phase, a neural network is used to learn the mapping between voltage and current flowing through a driver coil of the loudspeaker device based on training data comprising voltage samples and current samples. In a deployment phase the resulting trained neural network is used to determine an input control voltage $u_{control}$ to apply to the loudspeaker device.

Summary

It is an objective of the present disclosure to solve, or at least mitigate, the above problems. In other words, an objective of the present disclosure is to provide a loudspeaker controller that enables accurate linearization of loudspeakers. A particular objective of the present disclosure may be to enable more precise linearization by using neural networks. Another particular objective of the present disclosure is to provide a controller algorithm for linearizing a driving force acting on a loudspeaker's moving parts. In particular, linearization of force in loudspeakers is an overlooked opportunity, especially, the possibility of linearizing the force on a membrane of a loudspeaker by combining a dynamic current linearization technique with a static force factor inversion technique.

These and other objectives are at least partly met by the invention as defined in the independent claims. Some preferred exemplary embodiments are set out in the dependent claims.

According to a first aspect, there is provided a controller for controlling a loudspeaker, the controller configured to generate a loudspeaker control voltage signal from an input audio signal, the controller comprising circuitry configured to execute: a current model function configured to transform the input audio signal into a representation of a current signal; a voice coil displacement model function configured to determine a voice coil displacement signal from the input audio signal; a force factor compensation function configured to determine a force factor compensation signal based on the voice coil displacement signal and a force factor curve of the loudspeaker; a combining function configured to combine the representation of the current signal and the force factor compensation signal into a target current signal; and a nonlinear mapping function configured to transform the target current signal into the loudspeaker control voltage signal.

Hereby, contrary to mechanical parameters such as membrane acceleration, displacement, and velocity, a controller for controlling the cause of these parameters is provided. In other words, a controller for controlling a driving force of the loudspeaker's moving parts is provided. In yet other words, the controller allows for control and linearization of the speaker driving force. Hereby, a driving force controller may be provided.

The controller further allows for direct control of the current in the voice coil of the loudspeaker, thereby circumventing any needs of knowing the complex nonlinear electrical impedance of the loudspeaker. Hereby, manufacturing of loudspeakers may be simplified and more cost-efficient by allowing engineers to largely disregard requirements on the electrical impedance, since such requirements will be compensated for by the controller. Consequently, compromises on physical components of the loudspeaker may be made without negatively affecting the loudspeaker performance.

The controller is further practical and robust due to the direct control of, and access to, the current, which in turn is a robust physical quantity, meaning that the controller has an inherent ability to endure disturbances and maintain functionality. The direct control of the current also eliminates any need of real-time measurements of the loudspeaker's moving parts, thereby also removing any need of sensors and/or lasers for real-time monitoring of the loudspeaker's moving parts.

The controller may generally be configured to adaptively compensate for, and/or mitigate, undesirable effects on the loudspeaker. Thereby improving the loudspeaker's performance and sound quality.

The current model function may be configured to transform the input audio signal into the representation of the current signal by applying target loudspeaker current dynamics to the input audio signal. The target loudspeaker current dynamics may be desired current dynamics of the loudspeaker, or current dynamics of an ideal loudspeaker. The target loudspeaker current dynamics may be an configurable parameter. For example, nonlinear distortions may be reduced and/or counteracted by utilizing any combination of target current dynamics with linear and/or nonlinear components. The linear and/or nonlinear components may be weaker, i.e. have a lower impact or influence, compared to the inherent linear and/or nonlinear components of the loudspeaker. By utilizing purely linear target current dynamics, the loudspeaker may be fully linearized.

The voice coil displacement function may be configured to determine a voice coil displacement signal from the input audio signal by applying a loudspeaker displacement dynamics model to the input audio signal. The loudspeaker displacement dynamics model may be a model of how displacements of the voice coil of the loudspeaker are correlated to the current running through the voice coil. The loudspeaker displacement dynamics model may in other words be derived from a sequence of measurements of voice coil displacement for different known currents running through the voice coil. The voice coil displacement function may be a mapping function. In particular, voice coil displacement function may be a mapping from the input audio signal or a signal proportional to the input audio signal. In other words, the voice coil displacement function may be correlated to a voltage input signal to the loudspeaker. The displacement of the voice coil may be measured indirectly by measuring a displacement of the membrane of the loudspeaker. However, it is appreciated that the loudspeaker displacement dynamics model may be a model of how the displacement of any moving component of a moving system of the loudspeaker is correlated to the current running through the loudspeaker.

The force factor curve may be an inherent characteristic of the loudspeaker and may represent a force factor dependency on voice coil displacement. In particular, the force factor curve may be static in time. The force factor curve may particularly be the same for a certain loudspeaker line-up, generation, series, and/or brand. Thereby, the provided controller, trained on a first loudspeaker, may be applied to any other loudspeaker of the same kind as the first loudspeaker.

The force factor compensation signal may be calculated as a static target force factor value divided by an instantaneous value of the force factor curve of the loudspeaker for an instantaneous displacement. In other words, the force factor compensation signal may result in a flattening of the force factor curve, e.g. cancelling the force factor curve with an inverse of the force factor curve.

Compensating for the force factor and force factor curve may be notably facilitated by their static nonlinearity exhibited over time, and since there is a dependency only on a displacement of the moving parts of the loudspeaker, it is further simple to measure, and need only to be measured ones.

The nonlinear mapping function may be a representation of inverse loudspeaker current dynamics, and the nonlinear mapping function may be determined by training a model using ground-truth loudspeaker current as training input and voltage as training output. In other words, the nonlinear mapping function may be an inverse current model, e.g. using voice coil current as an input and voltage on loudspeaker terminals as output. Hereby, a controller with the ability to produce a control voltage signal that gives rise to a given desired loudspeaker current signal may be provided.

The model may be a neural network. The nonlinearity of neural networks may allow for capturing of complex relationships between the input and output variables. In particular, as universal function approximators, neural networks are capable to model functions with high precision, and can adapt to unseen data by learning and adjusting their internal parameters based on patterns. Thus, any need for manual engineering tasks is also eliminated. In other words, an advantage of utilizing neural networks lies in the fact that the model may adapt, learn, and optimize itself without the need for explicit human engineering efforts.

The driving force of the loudspeaker may be calculated by $F=Bl*i*Bl^{-1}(x)$, where $i*Bl^{-1}(x)$ corresponds to a product of the target current signal and the force factor compensation signal, and $Bl^{-1}(x)$ is the inverse of $Bl(x)$. In other words, the driving force may be equal to the product of an initial Bl-value, a desired current, and a component intended to correct or compensate for the initial Bl-value by linearizing it. Hence, the driving force is independent of the membrane displacement of the loudspeaker. The term $i*Bl^{-1}(x)$ has the physical quantity of current and is the desired (linear) loudspeaker current multiplied by the Bl-compensation signal, $Bl^{-1}(x)$.

It is appreciated that the current through the voice coil may be readily obtained, and may be measured using only a dedicated current probe and/or a resistor connected in series to the loudspeaker. Furthermore, the voice coil current may be considered being a loudspeaker response in an electrical domain. In other words, the voice coil current may be a broad band signal, similarly as the input voltage. Thereby, less noisy loudspeaker response, in comparison to mechanical responses, may be achieved.

According to a second aspect, there is provided a system comprising a loudspeaker and a controller according to the first aspect.

The system may improve sound quality of the loudspeaker by compensating for the loudspeaker's nonlinear behavior. Hence, a more accurate and faithful audio reproduction by the loudspeaker may be achieved. A frequency response of the loudspeaker may be also be enhanced by mitigation of irregularities, thus ensuring a balanced audio reproduction across a frequency spectrum.

The system may extend a dynamic range of the loudspeaker and may optimize performance of different loudspeaker models. In particular, real-time monitoring and feedback may enable continuous corrections for maintaining optimal linearization over time.

The second aspect may generally present the same or corresponding advantages as first aspect.

According to a third aspect, there is provided a computer-implemented method for controlling a loudspeaker, the method comprising: transforming an input audio signal into a representation of a current signal; determining a voice coil displacement signal from the input audio signal; determining a force factor compensation signal based on the voice coil displacement signal and a force factor curve of the loudspeaker; combining the representation of the current signal and the force factor compensation signal into a target current signal; and transforming the target current signal into a loudspeaker control voltage signal.

The third aspect may generally present the same or corresponding advantages as first and/or second aspect.

According to a fourth aspect a non-transitory computer-readable storage medium is provided. The non-transitory computer-readable storage medium having stored thereon instructions for implementing the method according to the third aspect, when executed on a device having processing capabilities.

The fourth aspect may generally present the same or corresponding advantages as first and/or second aspect.

Brief description of the drawings

The above, as well as additional objects, features, and advantages of the present disclosure, will be better understood through the following illustrative and non-limiting detailed description, with reference to the appended drawings. In the drawings, like reference numerals will be used for like elements unless stated otherwise.

Figure 1 is a cross-sectional view of an electrodynamic transducer intended for a loudspeaker.

Figure 2 shows an example of a force factor curve, i.e. force factor dependency on a displacement of a loudspeaker's moving system.

Figure 3 illustrates a box diagram of a controller for controlling a loudspeaker.

Figure 4A shows a measured original nonlinear current and a synthetic representation of a linear current.

Figure 4B shows a non-controlled current in comparison to a controlled current.

Figure 4C shows force factor curve and its inverse along with a resulting compensated force factor curve.

Figure 5 depicts a schematic block diagram of a method for controlling a loudspeaker.

Detailed description

In the following detailed description, some embodiments of the present inventive concept will be described more fully with reference to the accompanying drawings, in which preferred and/or exemplary variants of the inventive concept are shown. This inventive concept may, however, be embodied in many different forms and should not be construed as limited to the variants set forth herein; rather, these variants are provided for thoroughness and completeness, and intended to convey the scope of the inventive concept to the skilled person. It is further to be understood that features of the different embodiments are exchangeable between the embodiments and may be combined in different ways, unless anything else is specifically indicated.

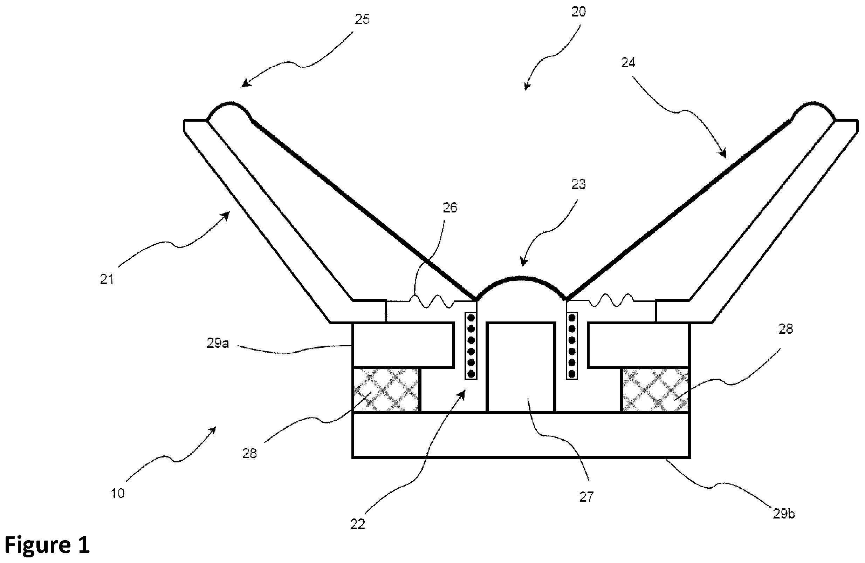

Figure 1 shows a cross-sectional view of an electrodynamic transducer intended for use as a loudspeaker 10. Here, the loudspeaker 10 is depicted to comprise a moving system 20 comprising a chassis 21, a voice coil 22, a dust cap 23, a membrane 24, a suspension 25, and a spider 26, however, it is understood that the moving system 20 may comprise further components. The chassis 21 may be a basket or a frame of the loudspeaker 10, the membrane 24 may be a diffusor, diaphragm, or cone of the loudspeaker, and the suspension 26 may be a surround that attaches to an outer edge of the membrane 24 to the loudspeaker chassis 21.

The loudspeaker depicted in Figure 1 further comprises a pole piece 27, a permanent magnet 28, and a front plate 29a and back plate 29b.

In case of an electrodynamic transducer, the driving force is the same as the Lorentz force. A conventional assumption is that the product of the magnetic field, $B$, in the magnetic gap (i.e. where the voice coil 22 is located) and the length of the voice coil wire in the magnetic gap, $l$, is one parameter $Bl$. The merging of the magnetic field, $B$, and the length of wire in the voice coil, $l$, into the compound parameter $Bl$ may facilitate the understanding of the force factors implications on loudspeakers 10. In particular, the parameter $Bl$ is dependent on the voice coil's position or displacement, $x$, within the non-uniform magnetic field, $B$. The compound parameter $Bl$ may determine the force experienced by the voice coil 22 when an electrical current flows through it. In other words, the driving force, $F$, depends on two values - the $Bl(x)$ parameter, and the current through the voice coil $i$ ($u$). Thus,

$$F(x, u) = Bl(x) \cdot i(u),$$

where the voice coil current i(u) is viewed as a loudspeaker response in an electrical domain, and generally depend on the input voltage u colinearly according to

$$i(u) = Z_{el}(x) \cdot u,$$

where $Z_{el}(x)$, the electrical impedance, is a complex nonlinear parameter dependent on a displacement, $x$, of the moving system 20 of the loudspeaker 10. It is further to be understood that the electrical impedance $Z_{el}(x)$ is dependent on the current running through the voice coil 22.

The parameter $BI(x)$ is considered a static nonlinear parameter throughout time, and may only be affected by the displacement, $x$, of the moving system 20, such as the displacement of the voice coil 22 and/or membrane 24. In other words, $BI(x)$ is a non-dynamic time-invariant function which is independent of any past inputs or states of the loudspeaker 10. In particular, the $BI(x)$ value for a given displacement, $x$, within the magnetic field, $B$, does not rely on any previous history - instead it is solely determined by the magnetic field strength, B, and the length of wire in the voice coil, $I$ , at that the given displacement, $x$. Additionally, the parameter $BI(x)$ is static in time in view of external factors such as temperature, aging, and other environmental conditions of the surroundings of the loudspeaker 10. This static nature is important for maintaining a consistent performance and predictable behavior of the loudspeaker 10. $BI(x)$ will below be referenced to as the force factor of the loudspeaker 10.

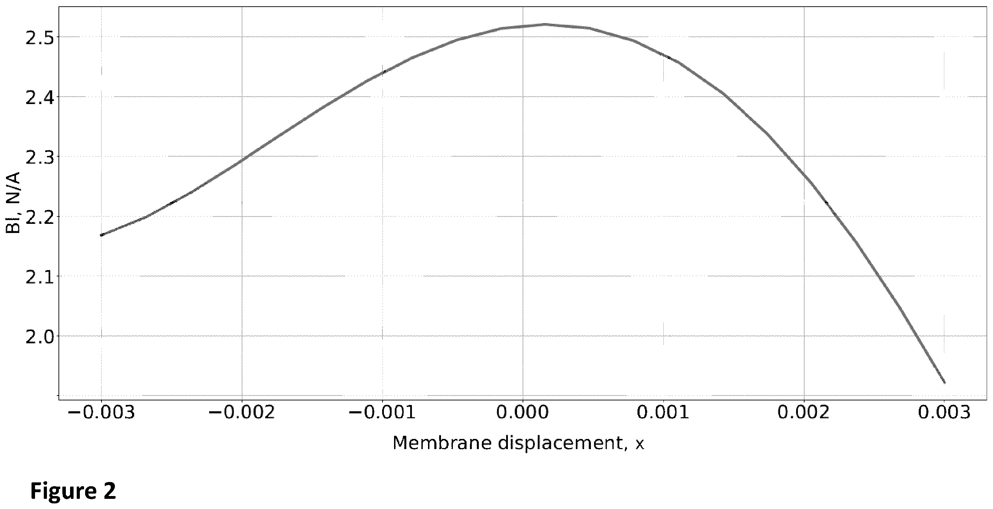

An example of the force factor dependency of the displacement x is illustrated in Figure 2. Here, a typical behavior of the force factor in electrodynamic transducers is depicted in the form of a force factor curve 141. It is to be understood that the shape of the force factor curve 141 is a characteristic feature to a certain loudspeaker line-up, generation, series, and/or brand. Hence, it may be assumed that loudspeakers of a same type have the same force factor curve 141. For greater or significant absolute displacements x, the force factor value typically decrease, thereby forming the characteristic bell-shape seen in Figure 2.

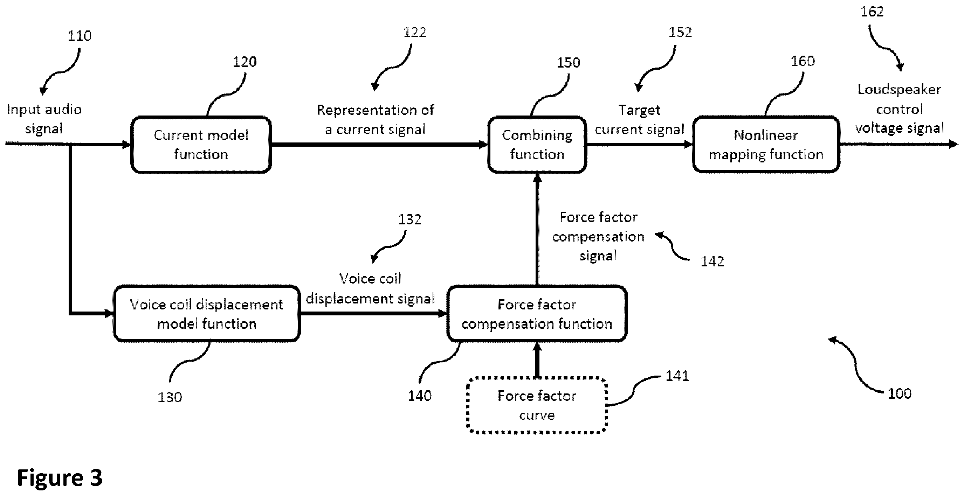

Figure 3 shows a controller 100 for controlling a loudspeaker 10. The controller 100 is configured to generate a loudspeaker control voltage signal 162 from an input audio signal 110. The input audio signal 110 is typically a digital signal and/or a voltage signal. The loudspeaker control voltage signal 162 is typically an analog signal. However, the controller 100 may synthesize a digital signal for the loudspeaker control voltage signal 162. The digital signal output may then be transformed to an analog signal and amplified when applied to the loudspeaker 10.

The controller 100 comprises circuitry. The circuitry is configured to carry out overall control of functions and operations of the controller 100. The circuitry may include a processor, such as a central processing unit, CPU, a microcontroller, or a microprocessor. The processor is configured to execute program code stored in a memory, in order to carry out functions and operations of the controller 100. The memory may be one or more of a buffer, a flash memory, a hard drive, a removable medium, a volatile memory, a non-volatile memory, a random access memory, RAM, or another suitable memory unit.

In a typical arrangement, the memory may include a non-volatile memory for long term data storage and a volatile memory that functions as system memory for the circuitry. The memory may exchange data with the circuitry over a data bus. Accompanying control lines and an address bus between the memory and the circuitry may also be present. Functions and operations of the controller 100 may be embodied in the form of executable logic routines (e.g., lines of code, software programs, etc.) that are stored on a non-transitory computer readable medium (e.g., the memory) of the controller 100 and are executed by the circuitry (e.g., using the processor). Furthermore, the functions and operations of the controller 100 may be a stand-alone software application or form a part of a software application that carries out additional tasks related to the controller 100. The described functions and operations may be considered a method that the corresponding part of the controller 100 is configured to carry out. Also, while the described functions and operations may be implemented in software, such functionality may as well be carried out via dedicated hardware or firmware, or a combination of hardware, firmware and/or software.

The controller 100 is configured to execute a current model function 120. The current model function 120 is configured to transform the input audio signal 100 into a representation of a current signal 122. It is to be understood that the currents referenced throughout the disclosure may be electrical currents. The current model function 120 may be configured to transform the input audio signal 110 into the representation of a current signal 122 by applying target loudspeaker current dynamics to the input audio signal 110. In other words, the transformation into the representation of a current signal 122 may be performed by applying desired loudspeaker current dynamics to the input audio signal 110, i.e. by passing the input voltage signal through a system with dynamics such to yield the desired current signal as output in the form of the representation of a current signal 122. In particular, desired or ideal characteristics of the current signal in response to a particular input voltage may be realized. The current model function 120 may be an impedance function and/or a linear function. The representation of the current signal 122 may be a linear current signal and/or an intermediate current signal. The representation of the current signal 122 may be considered to correspond to a hypothetical ideal speaker which would have had a current equal to the representation of the current signal 122.

The controller 100 is further configured to execute a voice coil displacement model function 130. The voice coil displacement model function 130 is configured to determine a voice coil displacement signal 132 from the input audio signal 110. The voice coil displacement model function 130 may be a displacement model. The displacement model being configured to predict a displacement of the loudspeaker's moving system 20 from the input audio signal 110. This may be used for force factor compensation. Hence, the voice coil displacement function 130 may be configured to determine a voice coil displacement signal 132 from the input audio signal 110 by applying a loudspeaker displacement dynamics model to the input audio signal 110. The loudspeaker displacement dynamics model may be derived from a sequence of measurements of displacements of the voice coil 22 of the loudspeaker 10. In particular, the displacement of the voice coil 22 may be measured by measuring a displacement of the loudspeaker's membrane 24. The displacement of the membrane 24 may be measured by a measuring device, such as a laser device. Alternatively, or additionally, the displacement of a moving system 20 of the loudspeaker 10, or at least one component of the moving system 20, may be measured. The moving system 20 may comprise a loudspeaker chassis 21, voice coil 22, dust cap 23, membrane 24, suspension 25, spider 26, and/or a voice coil former. The chassis 21 of the moving system 20 may attach the moving system 20 to a motor of the loudspeaker 10.

The controller 100 is further configured to execute a force factor compensation function 140. The force factor compensation function 140 is configured to determine a force factor compensation signal 142 based on the voice coil displacement signal 132 and a force factor curve 141 of the loudspeaker 10. As discussed above, in connection with Figure 2, the force factor curve 141 is an inherent characteristic of the loudspeaker 10 and may represent a force factor dependency on voice coil displacement. In other words, the force factor curve 141 may present a relation between the force factor, $Bl$, of a loudspeaker 10 and the displacement, x, of the moving system 20, such as the voice coil 22 and/or the membrane 24 of the loudspeaker 10. Thus, the force factor, $Bl(x)$, may be measured and/or extracted from a table or specification of the loudspeaker 10. However, it is to be understood that the force factor may not necessarily be measured or extracted, the force factor may be modeled to accurately represent or simulate an actual force factor, or modeled to correspond to an intended or idealized behavior. The modeling may be based on empirical data, scientific principles, or established theories to closely align with observed behavior or properties of force factors of loudspeakers.

The force factor compensation signal 142 may particularly be calculated as a static target force factor value, $Bl(0)$, divided by an instantaneous value of the force factor curve 141 of the loudspeaker 10 for an instantaneous displacement of the moving system 20. Hence, the force factor compensation signal 142 may be given by a force factor compensation function 140 according to

$$\frac{Bl(0)}{Bl(x(u))} \text{ ,}$$

where $x(u)$ is the displacement of the moving system 20 of the loudspeaker 10 for a certain voltage u. It is to be understood that operation may be conducted in a time domain and that the parameters and variables throughout this disclosure may be time-dependent. It is also to be understood that the force factor compensation function 140 is not limited to the above example and may be represented by any suitable function. However, in this particular example, the driving force may be realized by the following equation,

$$F(x, u) = Bl\big(x(u)\big) \cdot i \cdot \frac{Bl(0)}{Bl\big(x(u)\big)} \text{ ,}$$

where $i \cdot \frac{Bl(0)}{Bl(x(u))}$ may be considered the target current signal. Here, the equation shows the desired force. Specifically, the terms $Bl(x(u))$ cancel each other, leaving only the desired (target) current, $i$, and the $Bl(0)$-constant being independent of the displacement, x.

The controller 100 is also configured to execute a combining function 150. The combining function 150 is configured to combine the representation of the current signal 122 and the force factor compensation signal 142 into a target current signal 152. The target current signal 152 may consist of a desired linear current dynamics component and an addition component. The desired linear current dynamics component may be sent directly through the controller 100 such that there may be a linear current through the voice coil 22. The addition component may compensate for force factor nonlinearity, e.g. by using an inverse of the force factor curve 141. The combining function 150 may be a product of the target current signal 152 and the force factor compensation signal 142.

The controller 100 is further configured to execute a nonlinear mapping function 160. The nonlinear mapping function 160 is configured to transform the target current signal 152 into the loudspeaker control voltage signal 162. The nonlinear mapping function 160 may receive a (desired) target current signal 152 as input and generate an output voltage to be applied to a loudspeaker 10 for achieving a target response. Hence, the nonlinear mapping function 160 may synthesize the loudspeaker control voltage signal 162. In turn, the loudspeaker control voltage signal 162 may be applied to a loudspeaker 10 to generate, in the voice coil 22 of the loudspeaker 10, a target current corresponding to the target current signal 152. The target current may be any suitable target current, e.g. linear or nonlinear.

The nonlinear mapping function 160 may be a Long Short-Term Memory, LSTM, current controller. The nonlinear mapping function 162 may be a representation of inverse loudspeaker current dynamics, i.e. a system that corresponds to a voltage response for the inputted target current signal 152. The nonlinear mapping function 160 may be determined by training a model using measured ground-truth loudspeaker current as training input,

and voltage as training output. The model may be trained using backpropagation, such as backpropagation through time. The model may, for example, be a neural network or a recurrent neural network.

In essence, the controller 100 may comprise an LSTM cell connected to perceptron matching layer. In particular, the controller may have the same topology consisting of LSTM cell and perceptron matching layer with linear activation function as described by D. Volkov, and L. Brännmark in "Loudspeaker modeling using long/-short term memory neural networks", Express Paper 66, (2023 May).

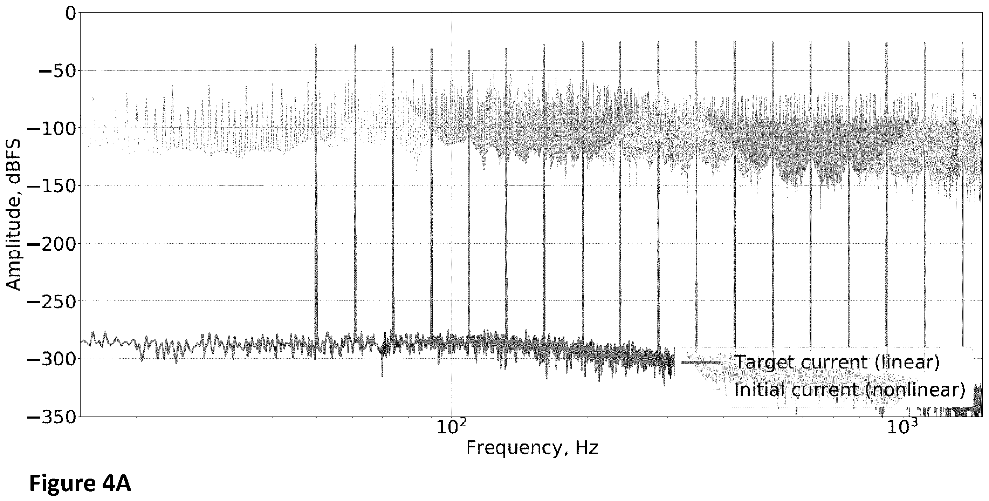

Figure 4A shows a measured original nonlinear current (dashed curve) from a loudspeaker 10, generated by a multitone signal used as input voltage, and a (synthetic) representation of a linear target current (uniform curve). The multitone signal may consist of summed or superimposed tonal signals, here realized by the sharp spectral peaks in Figure 4A, which may be used to distinguish linear and nonlinear contributions to the resulting displacement signal 132.

The spectrum corresponding to the original nonlinear current is here seen to have additional peaks between the original multitone peaks, which indicate nonlinear distortions of the original current signal. In a relative comparison, the desired linear target current signal has no additional peaks between the main peaks, and thereby no nonlinear distortions. In particular, it is noted that the amplitudes of the main peaks are matching the original nonlinear current signal, and thereby that the linear system performance is preserved. In other words, the alignment of the amplitude of the main spectral peaks in the output current signal and the spectral peaks in the original (non-controlled) current signal entails that faithful reproduction is attained of the input signal without significant distortions and/or alterations. Hence, the system maintains a consistent and predictable response.

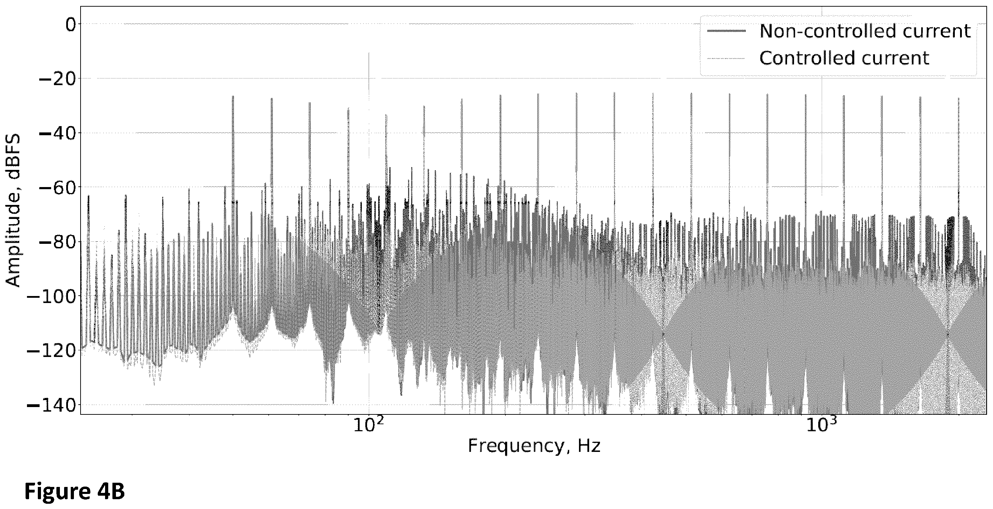

In Figure 4B, the original non-controlled current (uniform curve) is compared to the controlled current (dashed curve) generated by using the representation of a current signal 122 as input signal for the nonlinear mapping function 160. Here, the controlled current is seen to experience a distortion reduction of about 20 dB in the wide frequency range in comparison to the original non-controlled current.

However, as seen in the driving force equation previously presented, the linear target current is not enough to linearize the driving force $F(x, u)$, in particular, also the nonlinear displacement dependent force factor $Bl(x)$ is needed. Hence its contribution needs to be corrected for as well.

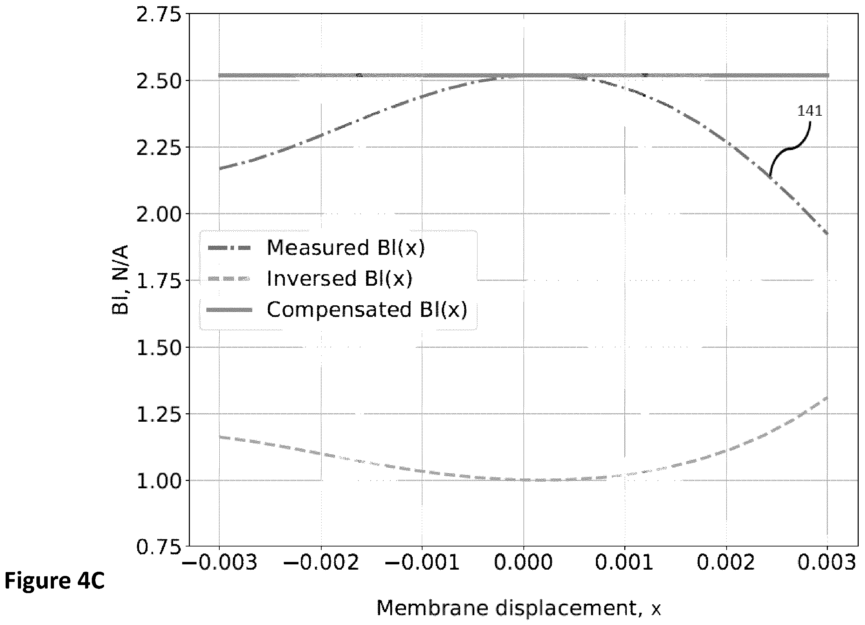

Figure 4C shows a force factor curve 141 (dash-dot curve) of a loudspeaker 10, an inverse of the force factor curve (dashed curve), and a resulting compensated force factor curve (uniform curve). By applying a force factor compensation signal 142, corresponding to the compensated curve, to the representation of a current signal 122, the loudspeaker driving force may be fully controlled as described in relation to Figure 3.

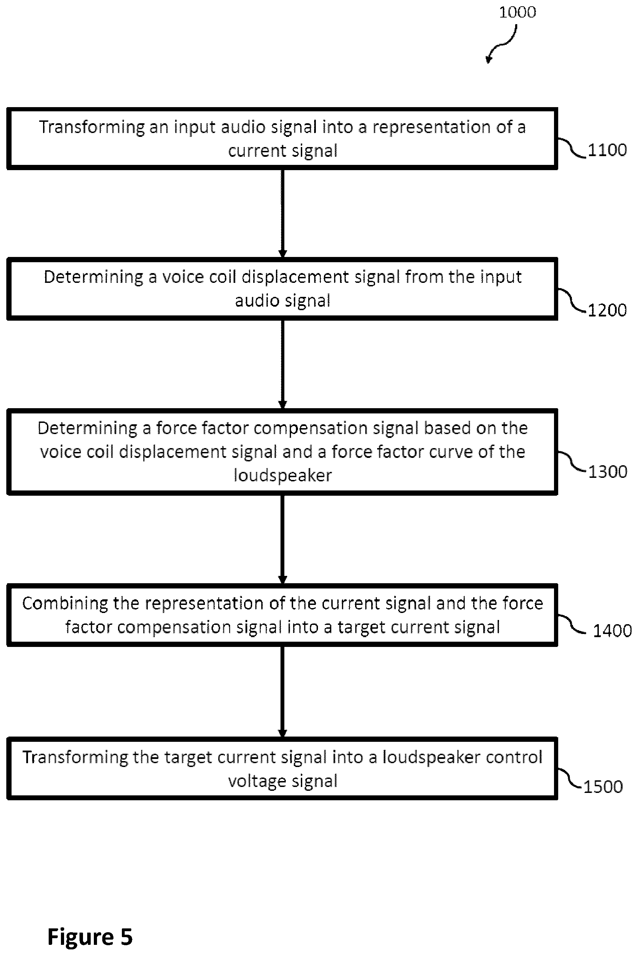

Figure 5 shows block diagram of a computer-implemented method 1000 for controlling a loudspeaker 10. The method may be provided by the controller 100 described above.

In particular, the method comprises transforming 1100 an input audio signal 110 into a representation of a current signal 122.

The method further comprises determining 1200 a voice coil displacement signal 132 from the input audio signal 110.

The method further comprises determining 1300 a force factor compensation signal 142 based on the voice coil displacement signal 132 and a force factor curve 141 of the loudspeaker 10.

The method further comprises combining 1400 the representation of the current signal 122 and the force factor compensation signal 142 into a target current signal 152.

The method further comprises transforming 1500 the target current signal 152 into a loudspeaker control voltage signal 162.

In the above, the inventive concept has mainly been described with reference to a limited number of examples. However, as is readily appreciated by a person skilled in the art, other examples than the ones disclosed above are equally possible within the scope of the inventive concept, as defined by the appended claims.

Reference numerals:

10 Loudspeaker
20 Moving system
21 Chassis
22 Voice coil
23 Dust cap
24 Membrane
25 Suspension
26 Spider
27 Pole piece
28 Permanent magnet
29a Front plate
29b Back plate
100 Controller
110 Input audio signal
120 Current model function
122 Representation of a current signal
130 Voice coil displacement model function
132 Voice coil displacement signal
140 Force factor compensation function
141 Force factor curve
142 Force factor compensation signal
150 Combining function
152 Target current signal
160 Nonlinear mapping function

162 Loudspeaker control voltage signal

## Claims

1. A controller (100) for controlling a loudspeaker (10), the controller (100) being configured to generate a loudspeaker control voltage signal (162) from an input audio signal (110), the controller (100) comprising circuitry configured to execute:

   a current model function (120) configured to transform the input audio signal (110) into a representation of a current signal (122);
   a voice coil displacement model function (130) configured to determine a voice coil displacement signal (132) from the input audio signal (110);
   a force factor compensation function (140) configured to determine a force factor compensation signal (142) based on the voice coil displacement signal (132) and a force factor curve (141) of the loudspeaker (10);
   a combining function (150) configured to combine the representation of the current signal (122) and the force factor compensation signal (142) into a target current signal (152); and
   a nonlinear mapping function (160) configured to transform the target current signal (152) into the loudspeaker control voltage signal (162).

2. The controller (100) according to claim 1, wherein the current model function (120) is configured to transform the input audio signal (110) into the representation of the current signal by applying target loudspeaker current dynamics to the input audio signal (110).

3. The controller (100) according to any one of the preceding claims, wherein the voice coil displacement model function is configured to determine the voice coil displacement signal (132) from the input audio signal (110) by applying a loudspeaker displacement dynamics model to the input audio signal (110).

4. The controller (100) according to any one of the preceding claims, wherein the force factor curve (141) is an inherent characteristic of the loudspeaker (10) and represents a force factor dependency on voice coil (22) displacement.

5. The controller (100) according to claim 4, wherein the force factor compensation signal (142) is calculated as a static target force factor value divided by an instantaneous value of the force factor curve (141) of the loudspeaker (10) for an instantaneous displacement.

6. The controller (100) according to any one of the preceding claims, wherein the nonlinear mapping function (160) is a representation of inverse loudspeaker current dynamics, and the nonlinear mapping function (160) is determined by training a model using ground-truth loudspeaker current as training input and voltage as training output.

7. The controller (100) according to claim 6, wherein the model is a neural network.

8. The controller (100) according to any one of the preceding claims, wherein a driving force of the loudspeaker (10) is calculated by $F=Bl*i*Bl^{-1}(x)$, where $i*Bl^{-1}(x)$ corresponds to a product of the target current signal (152) and the force factor compensation signal (142).

9. A system (200) comprising a loudspeaker (10) and a controller (100) according to any one of the preceding claims.

10. A computer-implemented method (1000) for controlling a loudspeaker (10), the method (1000) comprising:

    transforming (1100) an input audio signal (110) into a representation of a current signal (122);
    determining (1200) a voice coil displacement signal (132) from the input audio signal (110);
    determining (1300) a force factor compensation signal (142) based on the voice coil displacement signal (132) and a force factor curve (141) of the loudspeaker (10);
    combining (1400) the representation of the current signal (122) and the force factor compensation signal (142) into a target current signal (152); and
    transforming (1500) the target current signal (152) into a loudspeaker control voltage signal (162).

11. A non-transitory computer-readable storage medium having stored thereon instructions for implementing the method according to claim 10, when executed on a device having processing capabilities.

## Patentansprüche

1. Steuerung (100) zum Steuern eines Lautsprechers (10), wobei die Steuerung (100) so eingerichtet ist, dass sie aus einem Eingangsaudiosignal (110) ein Lautsprecher-Steuerspannungssignal (162) erzeugt, wobei die Steuerung (100) eine Schaltung aufweist, die so eingerichtet ist, dass sie

   eine Strommodellfunktion (120), die so eingerichtet ist, dass sie das Eingangsaudiosignal (110) in eine Darstellung eines Stromsignals (122) umwandelt;

eine Schwingspulen-Auslenkungsmodellfunktion (130), die so eingerichtet ist, dass sie aus dem Eingangsaudiosignal (110) ein Schwingspulen-Auslenkungssignal (132) bestimmt;

eine Kraftfaktor-Kompensationsfunktion (140), die so eingerichtet ist, dass sie auf der Basis des Schwingspulen-Auslenkungssignals (132) und einer Kraftfaktorkurve (141) des Lautsprechers (10) ein Kraftfaktor-Kompensationssignal (142) bestimmt;

eine Kombinierungsfunktion (150), die so eingerichtet ist, dass sie die Darstellung des Stromsignals (122) und das Kraftfaktor-Kompensationssignal (142) zu einem Zielstromsignal (152) kombiniert; und

eine nichtlineare Abbildungsfunktion (160), die so eingerichtet ist, dass sie das Zielstromsignal (152) in das Lautsprecher-Steuerspannungssignal (162) umwandelt,

ausführt.

2. Steuerung (100) nach Anspruch 1, wobei die Strommodellfunktion (120) so eingerichtet ist, dass sie das Eingangsaudiosignal (110) durch Anwenden einer Ziellautsprecherstromdynamik auf das Eingangsaudiosignal (110) in die Darstellung des Stromsignals umwandelt.

3. Steuerung (100) nach einem der vorhergehenden Ansprüche, wobei die Schwingspulenauslenkungsmodellfunktion so eingerichtet ist, dass sie das Schwingspulen-Auslenkungssignal (132) durch Anwenden eines Lautsprecherauslenkungsdynamikmodells auf das Eingangsaudiosignal (110) aus dem Eingangsaudiosignal (110) bestimmt.

4. Steuerung (100) nach einem der vorhergehenden Ansprüche, wobei die Kraftfaktorkurve (141) eine inhärente Eigenschaft des Lautsprechers (10) ist und eine Kraftfaktorabhängigkeit von der Auslenkung der Schwingspule (22) darstellt.

5. Steuerung (100) nach Anspruch 4, wobei das Kraftfaktor-Kompensationssignal (142) als ein statischer Zielkraftfaktorwert geteilt durch einen Momentanwert der Kraftfaktorkurve (141) des Lautsprechers (10) für eine momentane Auslenkung berechnet wird.

6. Steuerung (100) nach einem der vorhergehenden Ansprüche, wobei die nichtlineare Abbildungsfunktion (160) eine Darstellung der inversen Lautsprecherstromdynamik ist, und die nichtlineare Abbildungsfunktion (160) durch Trainieren eines Modells unter Verwendung des Ground-Truth-Lautsprecherstroms als Trainingsdaten und der Spannung als Trainingsausgang bestimmt wird.

7. Steuerung (100) nach Anspruch 6, wobei das Modell ein neuronales Netzwerk ist.

8. Steuerung (100) nach einem der vorhergehenden Ansprüche, wobei eine Antriebskraft des Lautsprechers (10) durch $F = Bl*i*Bl^{-1}(x)$ berechnet wird, wobei $i*Bl^{-1}(x)$ einem Produkt des Zielstromsignals (152) und des Kraftfaktor-Kompensationssignals (142) entspricht.

9. System (200), aufweisend einen Lautsprecher (10) und eine Steuerung (100) nach einem der vorhergehenden Ansprüche.

10. Computerimplementiertes Verfahren (1000) zum Steuern eines Lautsprechers (10), wobei das Verfahren (1000)

das Umwandeln (1100) eines Eingangsaudiosignals (110) in eine Darstellung eines Stromsignals (122);

das Bestimmen (1200) eines Schwingspulen-Auslenkungssignals (132) aus dem Eingangsaudiosignal (110);

das Bestimmen (1300) eines Kraftfaktor-Kompensationssignals (142) auf der Basis des Schwingspulen-Auslenkungssignals (132) und einer Kraftfaktorkurve (141) des Lautsprechers (10);

das Kombinieren (1400) der Darstellung des Stromsignals (122) und des Kraftfaktor-Kompensationssignals (142) zu einem Zielstromsignal (152); und

das Umwandeln (1500) des Zielstromsignals (152) in ein Lautsprecher-Steuerspannungssignal (162)

umfasst.

11. Nichtflüchtiges computerlesbares Speichermedium mit darauf gespeicherten Befehlen zum Umsetzen des Verfahrens nach Anspruch 10, wenn sie an einer Vorrichtung mit Verarbeitungsfähigkeiten ausgeführt werden.

**Revendications**

1. Contrôleur (100) permettant de contrôler un haut-parleur (10), le contrôleur (100) étant configuré pour générer un signal de tension de contrôle du haut-parleur (162) à partir d'un signal audio d'entrée (110), le contrôleur (100) comprenant un circuit configuré pour exécuter :

une fonction de modèle de courant (120) configurée pour transformer le signal audio d'entrée (110) en une représentation d'un signal de courant (122) ;

une fonction de modèle de déplacement de bobine mobile (130) configurée pour déterminer un signal de déplacement de bobine mobile (132) à partir du signal audio d'entrée (110) ;

une fonction de compensation de facteur de force (140) configurée pour déterminer un signal de compensation de facteur de force (142) sur la base du signal de déplacement de bobine mobile (132) et d'une courbe de facteur de force (141) du haut-parleur (10) ;

une fonction de combinaison (150) configurée pour combiner la représentation du signal de courant (122) et le signal de compensation de facteur de force (142) en un signal de courant cible (152) ; et

une fonction de mappage non linéaire (160) configurée pour transformer le signal de courant cible (152) en un signal de tension de contrôle du haut-parleur (162).

2. Contrôleur (100) selon la revendication 1, dans lequel la fonction de modèle de courant (120) est configurée pour transformer le signal audio d'entrée (110) en ladite représentation du signal de courant en appliquant une dynamique de courant de haut-parleur cible au signal audio d'entrée (110).

3. Contrôleur (100) selon l'une quelconque des revendications précédentes, dans lequel la fonction de modèle de déplacement de bobine mobile est configurée pour déterminer le signal de déplacement de bobine mobile (132) à partir du signal audio d'entrée (110) en appliquant un modèle de dynamique de déplacement de haut-parleur au signal audio d'entrée (110).

4. Contrôleur (100) selon l'une quelconque des revendications précédentes, dans lequel la courbe de facteur de force (141) est une caractéristique inhérente du haut-parleur (10) et représente une dépendance du facteur de force par rapport au déplacement de la bobine mobile (22).

5. Contrôleur (100) selon la revendication 4, dans lequel le signal de compensation du facteur de force (142) est calculé comme une valeur cible statique du facteur de force divisée par une valeur instantanée de la courbe de facteur de force (141) du haut-parleur (10) pour un déplacement instantané.

6. Contrôleur (100) selon l'une quelconque des revendications précédentes, dans lequel la fonction de mappage non linéaire (160) est une représentation de la dynamique inverse du courant du haut-parleur, et la fonction de mappage non linéaire (160) est déterminée en entraînant un modèle en utilisant le courant de vérité terrain du haut-parleur comme entrée d'entraînement et la tension comme sortie d'entraînement.

7. Contrôleur (100) selon la revendication 6, dans lequel le modèle est un réseau neuronal.

8. Contrôleur (100) selon l'une quelconque des revendications précédentes, dans lequel la force d'actionnement du haut-parleur (10) est calculée par $F=Bl*i*Bl^{-1}(x)$, où $i*Bl^{-1}(x)$ correspond au produit du signal de courant cible (152) et du signal de compensation du facteur de force (142).

9. Système (200) comprenant un haut-parleur (10) et un contrôleur (100) selon l'une quelconque des revendications précédentes.

10. Procédé mis en œuvre par un ordinateur (1000) pour contrôler un haut-parleur (10), le procédé (1000) comprenant :

la transformation (1100) d'un signal audio d'entrée (110) en une représentation d'un signal de courant (122) ;

la détermination (1200) d'un signal de déplacement de bobine mobile (132) à partir du signal audio d'entrée (110) ;

la détermination (1300) d'un signal de compensation du facteur de force (142) sur la base du signal de déplacement de la bobine mobile (132) et d'une courbe de facteur de force (141) du haut-parleur (10) ;

la combinaison (1400) de la représentation du signal de courant (122) et du signal de compensation du facteur de force (142) en un signal de courant cible (152) ; et

la transformation (1500) du signal de courant cible (152) en un signal de tension de contrôle du haut-parleur (162).

11. Support de stockage non volatil lisible par un ordinateur sur lequel sont stockées des instructions pour implémenter le procédé selon la revendication 10, lorsqu'il est exécuté sur un dispositif ayant des capacités de traitement.

EP 4 510 619 B1

**Figure 1**

Figure 2

**Figure 3**

EP 4 510 619 B1

**Figure 4A**

Figure 4B

Figure 4C

1000

Transforming an input audio signal into a representation of a current signal — 1100

Determining a voice coil displacement signal from the input audio signal — 1200

Determining a force factor compensation signal based on the voice coil displacement signal and a force factor curve of the loudspeaker — 1300

Combining the representation of the current signal and the force factor compensation signal into a target current signal — 1400

Transforming the target current signal into a loudspeaker control voltage signal — 1500

**Figure 5**

**EP 4 510 619 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2324888 A

- US 2022141578 A1